Europäisches Patentamt

European Patent Office

Office européen des brevets

(11) Publication number: **0 522 263 A1**

## EUROPEAN PATENT APPLICATION

(21) Application number: **92108128.7**

(22) Date of filing: **14.05.92**

(51) Int. Cl.5: **C03C 8/02**, C03C 8/06

(30) Priority: **01.07.91 US 724126**

(43) Date of publication of application:
**13.01.93 Bulletin 93/02**

(84) Designated Contracting States:
**DE FR GB**

(71) Applicant: **CORNING INCORPORATED**
**Houghton Park**
**Corning New York 14831(US)**

(72) Inventor: **Nigrin, Jaroslava Maria, Corning Inc.**
**Patent Department, SP FR 02-12**
**Corning, New York 14831(US)**
Inventor: **Rose, Paul LaVerne, Corning Inc.**
**Patent Department, SP FR 02-12**
**Corning, New York 14831(US)**
Inventor: **Stempin, John Louis, Corning Inc.**
**Patent Department, SP FR 02-12**
**Corning, New York 14831(US)**
Inventor: **Wexell, Dale Richard, Corning Inc.**
**Patent Department, SP FR 02-12**
**Corning, New York 14831(US)**

(74) Representative: **Smith, Sydney et al**
**Elkington and Fife, Beacon House, 113**
**Kingsway**
**London WC2B 6PP(GB)**

(54) **Transparent lead- and cadmium-free glazes.**

(57) This invention relates to glass frit compositions free from lead and cadmium which, when combined with an organic medium and fired to a glaze, yield a glaze exhibiting a grayish discoloration caused by the presence of a carbonaceous residue therein. The grayish discoloration can be eliminated by incorporating tin oxide in the frit composition which acts to catalyze the oxidation of and/or to directly oxidize that carbonaceous residue.

As recognized in the art of decorating glass, glass-ceramic, and ceramic articles, glazes are transparent glasses which are applied to provide decorative designs and finishes for the surfaces of such articles, thereby improving the aesthetic appearance of the products and promoting customer appeal. Glazes are conventionally applied to a surface in the form of finely-divided glass particles, commonly termed "frit", and this frit is thereafter fired to fuse to and form a well-bonded, continuous glassy coating on the surface of the article.

Commercially marketed frits have customarily contained high levels of lead oxide (PbO) and, less frequently, substantial concentrations of cadmium oxide (CdO). Those compounds possess two properties which render them especially desirable for use in glazing frits. First, they reduce the melting point of the glass so it can be fused to flow along the surface of the article to be glazed at a temperature which is sufficiently low to avoid thermal deformation of the article; and, second, they raise the refractive index of the glass. CdO has also been employed as a colorant in certain frits. However, both cadmium and lead oxides are highly toxic such that stringent restrictions have been applied by the Food and Drug Administration with respect to their release when compositions containing those metals come into contact with food.

It has been recognized that the ultimate solution to the problem of toxicity would comprise the total removal of both metals from the glazes. Accordingly, the past 15 years have seen extensive research directed to the development of lead-free and cadmium-free glasses suitable as frits for use in glazing glass, glass-ceramic, and ceramic bodies. As can be appreciated, the elimination of PbO and/or CdO has required the substitution of other components to import the necessary chemical and physical properties to the frits. That is, the frits must exhibit the following characteristics:

(a) the frit must exhibit good glass stability; i.e., the frit ought not to devitrify during firing to coat the surface of an article;

(b) the frit must demonstrate excellent resistance to attack by acids and bases because corrosion of the glaze coating can lead to loss of gloss, the generation of haze and/or iridescence, the development of porosity, or other defects deleterious to the appearance and/or physical character of the glaze;

(c) the firing or maturing temperature of the frit, i.e., the temperature at which the frit will display adequate flow to yield a smooth homogeneous coating, must be sufficiently low to inhibit thermal deformation of the article being coated;

(d) the linear coefficient of thermal expansion of the frit must be compatible with that of the body being coated to prevent crazing and/or spalling, with the preferred frits having a linear coefficient of thermal expansion somewhat lower than that of the body being coated, whereby the matured coating will be placed in compression when the coated body is cooled to room temperature; and, if a glaze exhibiting a high gloss is desired;

(e) the refractive index of the frit must be substantially higher than that of the body being coated.

It will be appreciated that, where the glaze-coated articles are destined for use in food service applications, e.g., for use as culinary ware and/or tableware, the glazes must resist attack by acids and bases present in foods and by detergents such as are employed in commercial dishwashers.

Formulations of frit compositions free from lead and cadmium have been marketed commercially. Those frits have universally suffered from a particular problem; viz., they display a grayish hue in the clear, "water white" state. Thus, when the glazes are present in the clear transparent state, i.e., no color pigment has been combined therewith, the glazes exhibit a pronounced grayish discoloration. As can be recognized immediately, a gray tint is customarily deemed to be undesirable when a colorless appearance is desired, and its presence can adversely affect the "pure" color of a pigmented glaze.

In the conventional practice for glazing glass, glass-ceramic, and ceramic articles, frit of a predetermined composition (with optionally, a color pigment) is blended into an organic liquid, such as an oil or other vehicle which may also contain an organic binder, surfactant, extender, etc. The mixture of frit and organic material is applied to the surface of the article and then fired at a sufficiently high temperature and period of time to cause the frit to flow and form a defect-free coating on the article.

Scanning auger spectroscopy examination of the gray glazes revealed the presence of clumps or pockets of organic residue interspersed throughout the glassy phase. Hence, the graying is the result of incomplete removal of carbonaceous residue formed during the firing operation. Stated in another way, because the frit particles sinter into a solid glaze before the organic material is completely oxidized upon firing, a carbonaceous residue is trapped therein which imparts the grayish hue to the glaze.

Ameliorations of the graying problem has been effected via a combination of: (1) milling the frit particles to an optimum mix of grain sizes; (2) selecting special organic media; and (3) most importantly, modifying the parameters of the firing process. The third factor of the combination has typically involved slowing the firing schedule and/or employing special gaseous atmospheres during firing. As can be appreciated immediately, those practices add cost and, consequently, exert a negative economic impact on commercial

2

production.

Therefore, the principal objective of the present invention was to devise glass frit compositions free from cadmium and lead demonstrating the four characteristics described above as being required and which, when applied to the surface of a glass, glass-ceramic, or ceramic article in accordance with parameters conventional in the commercial glazing art, will yield a sound glaze coating essentially free from a gray discoloration.

Another objective of the subject invention was to develop frit compositions which not only satisfy the requirements of the above-cited principal objective, but also would produce glazes exhibiting high gloss.

## Summary of the Invention

The basis of the instant invention which enables the above objectives to be achieved resides in the effect resulting from the inclusion of tin oxide, expressed in terms of $SnO_2$, in the composition. Stated more specifically, the present invention is founded in the discovery that, through the incorporation of an effective amount of $SnO_2$ in a wide range of lead-free and cadmium-free base frit compositions, typically at least about 1.5% by weight, the development of the undesirable gray coloration can be prevented. The expression "essentially free from gray coloration" is employed to avoid a possible problem arising where the discoloration may be so faint as to be unobjectionable to the eye, but which could be measured instrumentally.

U. S. Patent No. 4,590,171 (Nigrin) discloses lead-free and cadmium-free glass frits consisting essentially, in weight percent, of

| $Li_2O$ | 3-4 | $Bi_2O_3$ | 0-3 |
|---|---|---|---|
| $Na_2O$ | 0.75-3 | CaO | 0-65 |
| BaO | 3.5-9.5 | $K_2O$ | 0-2 |
| $B_2O_3$ | 14-17.5 | $Sb_2O_3$ | 0-5 |
| $Al_2O_3$ | 6.75-8.75 | $SnO_2$ | 0-2 |
| $SiO_2$ | 48-55 | SrO | 0-2 |
| $ZrO_2$ | 6.75-10.5 | $TiO_2$ | 0-3 |
| F | 3-4 | ZnO | 0-2.5 |
| $Bi_2O_3 + CaO + K_2O + Sb_2O_3 + SnO_2 + SrO + TiO_2 + ZnO$ | | | 0-7.5 |

Although $SnO_2$ is referred to as a possible optional ingredient, no specific utility is designated therefor and it appears in only one example in the patent, viz., a comparison example having a composition outside of the ranges demanded to produce a desirable glaze. There is no mention of the development of a grayish discoloration during the firing of those frits which required elimination.

## General Description of the Invention

It has been posited that the mechanism resulting in the elimination of the grayish tint from the lead-free and cadmium-free frit compositions involves the catalytic or direct oxidative activity of the tin species in the glass. X-ray photoelectron spectroscopy has indicated that the tin at the surface is in the $Sn^{+4}$ state and among its Sn-O bonds there is one Sn-O bond wherein the oxygen thereof is singly bonded only to the Sn and is not coordinated to any other atom in the glass structure. Both the $Sn^{+4}$ moiety and this oxygen present a formidable oxidizing agent. It has been postulated that this species either catalyzes or directly assists in oxidation of the organic medium with resultant elimination of the carbon residue; hence, no graying of the fired glaze. Belief in the credibility of this mechanism is strengthened by the fact that $SnO_2$, as a known oxidizing agent, is very effective in the 200°-550°C range for oxidation of various species. That operational regime fortuitously corresponds to the principal range of decomposition of the conventional organic media employed in the firing of the decorative frits.

Whereas $SnO_2$ has now been demonstrated in our laboratory to preclude the development of a gray coloration during the firing of a wide variety of frit compositions, the instant invention was fostered by the production of a gray coloration during the glazing of CORELLE[R] dinnerware marketed by Corning Incorporated, Corning, New York, and the need to solve that problem. Accordingly, the present invention will be described with particularity in its applicability to that product.

A lead-free and cadmium-free frit composition had been developed therefor by Corning Incorporated under the designation E-1809. That frit, included within U. S. Patent No. 4,590,171 (Nigrin), consisting essentially, expressed in terms of weight percent on the oxide basis as calculated from the batch, of

| Li$_2$O | 3.36 | ZnO | 1.49 | B$_2$O$_3$ | 16.14 | ZrO$_2$ | 8.09 |
|---------|------|------|------|-----------|-------|---------|------|
| Na$_2$O | 2.56 | BaO | 7.46 | SiO$_2$ | 50.76 | F | 3.87 |
| CaO | 1.00 | Al$_2$O$_3$ | 7.06 | TiO$_2$ | 2.09 | | |

was subject to the graying phenomenon when fired in accordance with the short time, relatively low temperature glazing schedule currently employed with a lead-containing frit. That is, removal of the grayish tint required longer firing times and higher firing temperatures, both of which practices added substantial cost.

In light of the above circumstances, a research program was initiated to discover lead-free and cadmium-free frit compositions exhibiting high gloss, maturation (firing) temperatures below 775°C, preferably about 750°-760°C, linear coefficients of thermal expansion compatible with that of the dinnerware (~57-62x10$^{-7}$/°C over the temperature range 25°-300°C), softening points between about 600°-625°C, and excellent resistance to attack by alkaline detergents such as are used in commercial dishwashers, which could be matured to a defect-free glaze coating essentially free from a gray tint utilizing the firing schedule then being employed with the commercial lead-containing frit. That firing schedule comprised heating the frit-coated ware from room temperature to about 750°-760°C in a period of about 5-8 minutes and thereafter air chilling the glazed ware. That research program led to glass frit compositions consisting essentially, expressed in terms of weight percent on the oxide basis, of:

| Li$_2$O | 2.5-4.5 | B$_2$O$_3$ | 12-18 | Bi$_2$O$_3$ | 0-3 |
|---------|---------|-----------|-------|------------|-----|
| Na$_2$O | 0.75-3.5 | SiO$_2$ | 43-56 | K$_2$O | 0-2 |
| CaO | 0-3 | TiO$_2$ | 0-5.5 | Sb$_2$O$_3$ | 0-5 |
| ZnO | 0-5 | ZrO$_2$ | 6.75-10.5 | SrO | 0-3 |
| BaO | 3-9.5 | SnO$_2$ | 1.5-4 | Ta$_2$O$_5$ | 0-6.5 |
| Al$_2$O$_3$ | 5.5-8.75 | F | 2.75-4.25 | | |

Because it is not known with which cation(s) the fluoride is combined in the glass and the level thereof is relatively small, it is simply reported as fluoride, in accordance with conventional glass analysis practice. Whereas SnO$_2$ concentrations in excess of 4% can be included in the frit compositions, no significant advantageous results appear to flow therefrom. Consequently, 4% SnO$_2$ has been deemed to constitute a practical maximum amount. In general, 1.75-2.25% SnO$_2$ have been found to be quite satisfactory in inhibiting the development of the gray tint. The total of all the optional oxides will not exceed about 12%.

Prior Art

The following United States patents are further illustrations of the extensive research conducted in recent years to produce glazes free from CdO and PbO:

Patent No. 4,224,074 (Reade); Patent No. 4,282,035 (Nigrin); Patent No. 4,285,731 (Nigrin), Patent No. 4,315,778 (Ueno et al.); Patent No. 4,376,169 (Eppler); Patent No. 4,446,241 (Francel et al.); Patent No. 4,537,862 (Francel et al.); Patent No. 4,814,298 (Nigrin); Patent No. 4,877,758 (Lee et al.).

In these disclosures, SnO$_2$ is either absent, or no utility is ascribed to it and the present problem is not recognized.

Other patents describing the preparation of lead-free and cadmium-free frits, but wherein SnO$_2$ is not included in the disclosure, are listed below:

| | |
|---|---|
| 4,084,976 (Hinton) | 4,340,645 (O'Conor) |
| 4,120,733 (Knapp) | 4,493,900 (Nishino et al.) |
| 4,256,497 (Knapp) | 4,544,258 (Francel) |
| 4,280,843 (Graff) | 4,731,347 (Stetson) |
| 4,312,951 (Eppler) | 4,814,298 (Nelson et al.) |
| 4,316,963 (Hommel et al.) | 4,970,178 (Klimas et al.) |

## Description of Preferred Embodiments

Table I records a group of frit compositions, expressed in terms of parts by weight on the oxide basis as calculated from the batch, illustrating the scope of the present invention. Inasmuch as the sum of the individual constituents totals or very closely approximates 100, for all practical purposes the tabulated figures may be deemed to represent weight percent. Because it is not known with which cation(s) the fluoride is combined in the glass and the concentration thereof is relatively small, it is merely reported as fluoride in excess of the base composition, in accordance with conventional glass analysis practice. In general, the actual batch ingredients may be any materials, either an oxide or other compound, which, when melted together with the other batch ingredients, will be converted into the desired oxide in the proper proportions. For example, $Li_2CO_3$ can provide a source of $Li_2O$ and $NaNO_3$ a source of $Na_2O$. The fluoride component will customarily be incorporated as an alkali metal fluoride or silicofluoride.

The batch ingredients were compounded, thoroughly mixed together to aid in obtaining a homogeneous melt, and charged into platinum or silica crucibles. After placing lids thereon, the crucibles were introduced into a furnace operating at about 1300°-1450°C and the batches melted therein for about four hours. One portion of each melt was poured into a steel mold to form a glass slab having the dimensions of about 4" x 2" x 0.25" and that slab was transferred immediately to an annealer operating at about 475°C. The remainder of each melt was poured as a fine stream into a bath of tap water (that practice being termed "drigaging" in the glass art) to yield finely-divided particles which were further comminuted through milling to particles passing through a No. 200 U. S. Standard Sieve (74 microns).

It will be recognized that the above description of mixing, melting and forming procedures reflects laboratory activity only and that the glass compositions operable in the present invention are capable of being processed employing mixing, melting, and forming practices conventionally utilized in commercial glassmaking.

## TABLE I

|  | 1 | 2 | 3 | 4 | 5 | 6 | 7 | 8 |
|---|---|---|---|---|---|---|---|---|
| $Li_2O$ | 3.23 | 3.39 | 3.36 | 3.36 | 3.33 | 3.37 | 3.37 | 3.37 |
| $Na_2O$ | 2.46 | 2.49 | 2.47 | 2.50 | 2.47 | 2.51 | 2.51 | 2.51 |
| CaO | 0.96 | -- | 0.99 | -- | -- | 0.96 | 1.93 | 0.96 |
| ZnO | 1.43 | -- | -- | 3.36 | 1.43 | 3.85 | 3.85 | 3.85 |
| BaO | 7.17 | 7.38 | 7.31 | 4.32 | 7.14 | 7.32 | 7.32 | 7.32 |
| $Al_2O_3$ | 6.78 | 6.99 | 6.92 | 7.21 | 7.14 | 7.03 | 7.03 | 7.03 |
| $B_2O_3$ | 15.5 | 16.00 | 15.8 | 16.0 | 15.8 | 16.0 | 16.0 | 16.0 |
| $SiO_2$ | 48.8 | 49.9 | 49.4 | 50.0 | 49.5 | 45.5 | 46.4 | 45.5 |
| $TiO_2$ | 2.01 | -- | -- | -- | -- | 1.93 | -- | -- |
| $ZrO_2$ | 7.77 | 7.98 | 7.90 | 7.69 | 7.61 | 7.9 | 7.9 | 7.9 |
| $Sb_2O_3$ | -- | -- | -- | -- | -- | -- | -- | 1.93 |
| F | 3.72 | 3.69 | 3.66 | 3.56 | 3.52 | 3.57 | 3.57 | 3.56 |
| $SnO_2$ | -- | 2.00 | 1.98 | 1.92 | 1.90 | -- | -- | -- |

TABLE I (Cont.)

| | 9 | 10 | 11 | 12 | 13 | 14 | 15 | 16 |
|---|---|---|---|---|---|---|---|---|
| $Li_2O$ | 3.42 | 3.41 | 3.33 | 3.42 | 3.42 | 3.45 | 3.47 | 3.43 |
| $Na_2O$ | 2.51 | 2.07 | 1.94 | 2.6 | 2.59 | 2.61 | 2.64 | 2.59 |
| $CaO$ | 0.98 | 1.69 | 1.48 | 1.02 | 2.01 | -- | -- | -- |
| $ZnO$ | 3.38 | 4.70 | 4.40 | 1.48 | 1.48 | 1.51 | 1.52 | 2.64 |
| $BaO$ | 6.97 | 6.80 | 5.87 | 7.5 | 7.49 | 7.50 | 7.56 | 7.47 |
| $Al_2O_3$ | 6.57 | 3.83 | 4.04 | 7.12 | 7.11 | 7.20 | 7.26 | 6.47 |
| $B_2O_3$ | 15.36 | 16.0 | 15.84 | 16.2 | 16.2 | 16.5 | 16.6 | 16.4 |
| $SiO_2$ | 45.94 | 46.5 | 44.9 | 45.7 | 43.7 | 47.1 | 47.4 | 46.8 |
| $TiO_2$ | -- | 1.90 | 1.93 | 1.00 | 2.01 | -- | -- | -- |
| $ZrO_2$ | 7.44 | 7.10 | 7.00 | 8.08 | 8.08 | 8.25 | 8.25 | 8.22 |
| $Sb_2O_3$ | 2.05 | -- | -- | -- | -- | -- | -- | -- |
| $Ta_2O_5$ | -- | 6.5 | 4.07 | -- | -- | -- | -- | -- |
| F | 3.40 | 3.25 | 3.30 | 3.56 | 3.56 | 3.65 | 3.83 | 3.65 |
| $SnO_2$ | 1.94 | -- | 1.78 | 2.11 | 2.10 | 2.11 | 1.42 | 2.09 |

| | 17 | 18 | 19 | 20 | 21 | 22 | 23 |
|---|---|---|---|---|---|---|---|
| $Li_2O$ | 3.60 | 3.87 | 3.49 | 3.47 | 3.25 | 3.48 | 3.18 |
| $Na_2O$ | 2.86 | 2.77 | 3.07 | 3.46 | 3.34 | 3.29 | 3.09 |
| $ZnO$ | 2.12 | 2.20 | 2.10 | 1.51 | 2.77 | 1.45 | 1.59 |
| $BaO$ | 7.61 | 3.96 | 6.48 | 7.48 | 6.40 | 7.15 | 6.51 |
| $Al_2O_3$ | 6.59 | 6.12 | 6.56 | 6.48 | 6.40 | 6.19 | 6.47 |
| $B_2O_3$ | 16.7 | 17.4 | 17.2 | 17.0 | 16.80 | 15.90 | 16.12 |
| $SiO_2$ | 47.8 | 49.9 | 47.5 | 46.4 | 46.0 | 48.8 | 47.18 |
| $TiO_2$ | 1.13 | -- | -- | 1.12 | -- | -- | 0.97 |
| $ZrO_2$ | 6.62 | 8.74 | 8.24 | 7.74 | 8.07 | 7.95 | 8.02 |
| $K_2O$ | -- | -- | -- | -- | -- | -- | -- |
| F | 3.71 | 3.81 | 3.67 | 3.65 | 3.63 | 3.48 | 3.47 |
| $SnO_2$ | 1.07 | 1.10 | 1.59 | 1.58 | 3.29 | 2.13 | 2.03 |

Bars were cut from the glass slabs for use in determining the linear coefficient of thermal expansion (Exp.) over the temperature range of 25°-300°C, expressed in terms of $X10^{-7}/°C$, the softening point (S.P.), reported in °C, and a qualitative assessment of resistance to attack by alkaline detergents (Deter). That assessment was based upon the following procedure:

(a) 0.3% by weight aqueous solution of SUPER SOILAX[R] detergent, marketed by Economics Laboratories, St. Paul, Minnesota, is prepared;

(b) the solution is heated to 95°C;

(c) glazed samples are immersed therein; and

(d) after 48 hours the samples are withdrawn and inspected visually to observe any change in the gloss of the glaze.

The appearance of the gloss was evaluated utilizing the following rating system:

(1) = excellent, essentially no change in gloss;

(2) = very good, barely perceptible loss of gloss;

(3) = good-to-fair, obvious visible loss of gloss; and

(4) = poor, heavy loss of gloss.

The frits of Table I were mixed with No. 175 screening oil marketed by Drakenfeld Colors, Washington, Pennsylvania, silk screened onto a 6.5" diameter CORELLE plate, and then fired following a commercial schedule comprising heating to 750°-760°C within 5.5 minutes and thereafter air chilled to room temperature. The initial gloss of all of the examples was high, being deemed to be visually equivalent to that exhibited by E-1809. The extent of grayness was qualitatively evaluated visually.

Table II reports those observations and determinations of thermal expansion, softening point, and resistance to detergent where measured.

## TABLE II

| | 1 | 2 | 3 | 4 | 5 | 6 | 7 | 8 |
|---|---|---|---|---|---|---|---|---|
| Gray | Gray | No | No | No | No | Gray | Gray | Gray |
| Exp. | 59.3 | 58.2 | 58.8 | 55.7 | 59.7 | 60.3 | 61.2 | 60.7 |
| S.P. | 618 | 627 | 627 | 615 | 615 | 606 | 611 | 606 |
| Deter. | 1 | 1 | 1 | 1 | 1 | 1 | 1 | 1 |

| | 9 | 10 | 11 | 12 | 13 | 14 | 15 | 16 |
|---|---|---|---|---|---|---|---|---|
| Gray | No | Gray | No | No | No | No | Slight | No |
| Exp. | 60.0 | 59.2 | 58.5 | 61.9 | 62.8 | 59.5 | 59.4 | 59.5 |
| S.P. | 618 | 618 | 624 | 615 | 613 | 618 | 614 | 616 |
| Deter. | 1 | 1 | 1 | 1 | 1 | 1 | 1 | 1 |

| | 17 | 18 | 19 | 20 | 21 | 22 | 23 |
|---|---|---|---|---|---|---|---|
| Gray | Some | Some | No | No | No | No | No |
| Exp. | 61.7 | 58.4 | 60.4 | 60.5 | 59.2 | 60.0 | 61.2 |
| S.P. | 603 | 612 | 611 | 610 | 618 | 620 | 624 |
| Deter. | 2 | 1 | 1 | 1 | 2 | 1 | 1 |

As can be discerned immediately from an inspection of Tables I and II, especially from an inspection of comparative Examples 1, 6, 7, 8, 10, 17, and 18, the presence of $SnO_2$ in amounts of at least 1.5% by weight are necessary to alleviate the problem of graying. But, whereas up to 4% $SnO_2$ may be incorporated, its inclusion in amounts greater than about 2.5% tends to raise the softening point of the glass which, in turn, exerts an adverse effect upon the gloss displayed by the glaze. Therefore, $SnO_2$ concentrations between about 1.50-2.25% are preferred.

**Claims**

1. A glass frit composition essentially free from lead and cadmium which, when combined with an organic medium, can be fired to a glaze essentially free from a grayish discoloration resulting from the presence of a carbonaceous residue, said frit composition containing an amount of tin oxide effective to catalyze the oxidation of and/or to directly oxidize the carbonaceous residue during firing thereof to thereby remove it from the glaze.

2.  A glass frit composition according to claim 1 wherein tin oxide, expressed in terms of $SnO_2$, is present in an amount of at least 1.5% by weight.

3.  A glass frit composition according to claim 2 exhibiting high gloss and excellent resistance to attack by alkaline detergents as evidenced by essentially no change in gloss after an extended immersion in an aqueous solution of an alkaline detergent.

4.  A glass frit composition according to claim 3 exhibiting a linear coefficient of thermal expansion (25° - 300° C) of about $58\text{-}62 \times 10^{-7}/°C$ and a softening point between about 600° -625° C.

5.  A glass frit composition according to claim 4 consisting essentially, expressed in terms of weight percent on the oxide basis, of:

| $Li_2O$ | 2.5-4.5 | $B_2O_3$ | 12-18 | $Bi_2O_3$ | 0-3 |
|---|---|---|---|---|---|
| $Na_2O_3$ | 0.75-3.5 | $SrO_2$ | 43-56 | $K_2O$ | 0-2 |
| CaO | 0-3 | $TiO_2$ | 0-5.5 | $Sb_2O_3$ | 0-5 |
| ZnO | 0-5 | $ZrO_2$ | 6.75-10.5 | SrO | 0-3 |
| BaO | 3-9.5 | $SnO_2$ | 1.5-4 | $Ta_2O_5$ | 0-6.5 |
| $Al_2O_3$ | 5.5-8.75 | F | 2.75-4.25 | | |

wherein the total of all optional components does not exceed 12%.

# European Patent Office

## EUROPEAN SEARCH REPORT

Application Number

EP 92 10 8128

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl.5) |
| D,X | US-A-4 590 171 (NIGRIN) <br> * claims 1-2; example 33 * <br> --- | 1-5 | C03C8/02 <br> C03C8/06 |
| X <br><br> D | GB-A-2 053 887 (TOKA SHIKISO CHEMICAL INDUSTRY CO.) <br> * page 1, line 20 - line 39 * <br> & US-A-4 315 778 <br> --- | 1-3 | |
| D,X | US-A-4 877 758 (LEE) <br> * column 2, line 51 - column 3, line 68 * <br> --- | 1-3 | |
| X | DATABASE WPIL <br> Section Ch, Week 9130, 1991 <br> Derwent Publications Ltd., London, GB; <br> Class L, AN 91-221101 <br> & SU-A-1 590 456 (Z.H.N.AKHMCHET) 7 September 1990 <br> * abstract * <br><br> ----- | 1,2 | |
| | | | TECHNICAL FIELDS SEARCHED (Int. Cl.5) |
| | | | C03C |

The present search report has been drawn up for all claims

| Place of search | Date of completion of the search | Examiner |
|---|---|---|
| THE HAGUE | 06 OCTOBER 1992 | VAN BOMMEL L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)